# EUROPEAN PATENT SPECIFICATION

(11) **EP 1 501 902 B1**
(45) Date of publication and mention of the grant of the patent: **27.02.2008**
(21) Application number: 03745476.6
(22) Date of filing: 25.03.2003
(51) Int. Cl.: C09D 167/00, C09D 5/03

(54) **COATING COMPOSITION LESS SUSCEPTIBLE TO SURFACE DEFECTS**
WENIGER ZU OBERFLÄCHENFEHLERN NEIGENDER LACK
COMPOSITION DE REVETEMENT MOINS SENSIBLE A DES DEFAUTS SUPERFICIELS

(30) Priority: 29.03.2002 EP 02076253; 11.02.2003 EP 03075400
(43) Date of publication of application: 02.02.2005
(73) Proprietor: DSM IP Assets B.V., 6411 TE Heerlen (NL)
(72) Inventor: BELDER, Eimber, Gerrit, NL-8042 EX Zwolle (NL); HERGAARDEN, Mark, NL-8031 HL Zwolla (NL); BAARS, Maurice, Wilhelmus, Petrus, NL-8043 AB Zwolle (NL)
(74) Representative: van Tol-Koutstaal, Charlotte A.
(86) International application number: PCT/NL2003/000227
(87) International publication number: WO 2003/082996

(56) References cited:
- EP-A- 0 315 082
- EP-A- 0 315 084
- EP-A- 0 371 528
- WO-A-93/04122
- US-A- 4 255 553
- US-A- 4 837 393
- US-A- 5 637 654
- US-A- 5 858 545
- PATENT ABSTRACTS OF JAPAN vol. 010, no. 369 (P-525), 10 December 1986 (1986-12-10) & JP 61 162053 A (CANON INC), 22 July 1986 (1986-07-22)

## Description

The invention relates to a coating composition comprising a polyester based on a polyhydric alcohol and a polybasic carboxylic acid and an additive. The invention further relates to a process for curing the composition comprising the polyester and the additive. The invention also relates to an entirely or partly coated substrate. It further relates to the use of the additive as a tribo-chargeability enhancer.

A composition comprising a polyester and an additive is known from WO97/30131. In WO97/30131 curable coating compositions comprising a (liquid or particulate) curable film-forming resinous material and a flow control agent are described. The flow control agent is a copolymer of polymerizable ethylenically unsaturated monomers. Examples given of these ethylenically unsaturated monomers are alkyl acrylates and methacrylates. The flow control agent is added to enhance the rheology or to control cratering and reduce orange-peel.

A disadvantage of the mentioned (meth)acrylic-based flow control agents is that they easily lead to contamination of the coating environment, thereby causing defects on coated substrates that are processed afterwards. The same disadvantage holds for the other generally known flow additives: silicon-containing polymers and fluorinated polymers. This disadvantage causes a lot of off-spec products and leads to an increase in waste and also increases the costs connected to the coating process. Therefore it is very important, when using flow agents, to keep the number of changes between different kinds of flow agents as low as possible, and so reducing the risk of contamination. Consequently the users of coating compositions comprising a flow agent, hesitate very much to use other flow agents than they are already using.

In the coating industry there is a growing interest in the use of cheaper film-forming materials as former "new" areas tend to mature and the materials tend to get used more and more in more general purpose areas instead of dedicated niches. Along with this shift in field of application a shift in price setting is taking place, making cheaper versions of the formerly used film-forming materials necessary. A possible cheaper alternative makes use of cheaper polyhydric alcohols, for example ethylene glycol. However it is commonly known that polyesters that are mainly based on ethylene glycol as the polyhydric alcohol, are very susceptible to cratering, formation of fish-eyes and pinholes. This is generally referred to as "surface defects".

With cratering is here and hereinafter meant the formation of a bowl-shaped depression in a paint or varnish. With fish-eyes is here and hereinafter meant a defect in a paint that manifests itself by the crawling of viscous paint into a recognized pattern resembling small dimples or "fish-eyes". With pinhole is here and hereinafter meant a film defect characterized by small pore-like flaws in a coating, which extend entirely through the applied film and have the general appearance of pinpricks when viewed by reflected light.

In view of the demand for polyesters wherein the polyhydric alcohol consists for a larger amount of ethylene glycol and the demand for coatings that are free or almost free of craters, fish-eyes and pinholes, and in view of the wish of the users of the coating system to keep the number of changes in the flow agent as low as possible, a solution for the problem of those polyesters with surface defects had to be found.

It has now been found that the above-described problems can, wholly or partially, be solved by a coating composition comprising a polyester based on a polyhydric alcohol and a polybasic carboxylic acid and an additive wherein the polyhydric alcohol consists for at least 8 w% of ethylene glycol and that the additive is at least one tertiary compound (B) according to formula I and/or II

YR¹R²R³ (I)

or

(YR¹R²R³R⁴)⁺X⁻ (II)

wherein:
Y is N,
R¹, R², R³ or R⁴ are independently of each other, substituted or unsubstituted carbon chains with 1-50 carbon atoms in the main chain and wherein at least one of R¹, R², R³ or R⁴ is unsubstituted and has at least 8 carbon atoms
X⁻ is halide.

Further it has surprisingly been found that by the addition of the additive B as defined by formula I and/or II, the tribo-chargeability of the coating composition is increased. This makes it possible to use less or no additional tribo-chargeability enhancer, which is from an economic point of view very advantageous. In standard coating compositions that are applied onto the substrate by the use of a tribo-gun, a tribo-chargeability enhancer is added. By the use of the additive according to formula I and/or II to overcome the problem with surface defects, the tribo-chargeability is at the same time increased.

Further it has surprisingly been found that the additive according to formula I and/or II can also function as a cure catalyst. The presence of this additive thus makes the addition of a separate cure catalyst redundant.

The polyester according to the invention may be prepared in a manner known to the man skilled in the art by condensation of polyhydric alcohols and polybasic carboxylic acids or the corresponding anhydrides, in the presence of a suitable esterification catalyst. The use of exclusively bi-functional monomers produces linear polyesters. If tri-functional or higher-functional monomers are added, branched polyesters are formed. The desired average molecular weight can be controlled by the degree of conversion of acid and hydroxyl groups; that is by the duration of the reaction and reaction conditions and by the ratio of acid group to hydroxyl group in the starting mixture.

The polyester according to the invention is based on ethylene glycol as the polyhydric alcohol. The amount of ethylene glycol is at least 8 w%. Above this limit, the amount of ethylene glycol in the polyester can be tailored to one's needs. It is preferred to use the ethylene glycol in an amount between 10 and 22 w%, more preferred between 12 and 20 w%. The amount is calculated based on the polyester as prepared, thus an amount that during synthesis would not lead to incorporation in the polyester is not included in this amount.

According to the invention ethylene glycol can also (partially) be introduced by the use of polyethylene terephthalate (from recycled polyethylene terephthalate (PET) or "virgin" PET and mixtures thereof) whilst respecting the amounts described above.

In addition to ethylene glycol mentioned above, one or more other polyhydric alcohols may be present. Suitable polyhydric alcohols have a functionality of at least two. The number of carbon atoms in the suitable polyhydric alcohol is not particularly critical and can vary between wide ranges. However it is preferred to use a polyhydric alcohol that contains from 2-24 carbon atoms. Examples of suitable polyhydric alcohols are di-ethylene glycol, polyethylene glycol or polypropylene glycol, 1,4-butanediol, 1,6-hexanediol, neopentyl glycol, 2-methyl-1,3-propanediol, 1,3-butanediol, 1,3-propanediol, 1,2-propanediol, 2-ethyl-2-butyl-1,3-propanediol, trimethylpentanediol, hydroxypivalic neopentyl glycol ester, tricyclodecane dimethanol, cyclohexane dimethanol, hydrogenated diphenylol propane, trimethylolpropane, pentaerythritol and/or bisphenol A bis(hydroxyethyl) ether or mixtures of any of them. Preferably these additional polyhydric alcohols are present in a total amount of at least 2 w% (calculated based on the polyester as prepared). With "total amount" is meant here, the sum of all additional polyhydric alcohols. More preferred, one or more polyhydric alcohols chosen from the list 1,2-propanediol, di-ethylene glycol, polyethylene glycol or polypropylene glycol or mixtures of any of them are present.

Suitable polybasic carboxylic acids are known to the man skilled in the art and have a functionality of at least two. The suitable polybasic carboxylic acids can contain for example from 2-36 carbon atoms. They can have a straight or branched chain. They can be aliphatic or aromatic in nature. The polybasic carboxylic acids can also be used in their functional equivalent form. Examples of functional equivalents are the anhydrides and lower alkyl esters of the acids. With lower alkyl" is here and hereinafter meant alkyl chains with up to and including 6 carbon atoms.

Suitable aromatic polybasic carboxylic acids for preparing the polyesters have a functionality of at least two. The suitable aromatic polybasic carboxylic acids can contain for example from 2-36 carbon atoms. Preferably aromatic polybasic carboxylic acids are used with 6-16 carbon atoms. Suitable examples of aromatic polybasic carboxylic acids are for example phthalic acid, isophthalic acid and/or terephthalic acid, dimethyl terephthalate ester, trimellitic acid, 1,8-naphthalic acid and pyromellitic acid or their corresponding anhydrides. It is also possible to use the corresponding lower alkyl esters. With "lower alkyl ester" is here and hereinafter meant the ester obtained by the reaction between the carboxylic acid and an alkyl alcohol with up to and including 6 carbon atoms.

Suitable aliphatic polybasic carboxylic acids for preparing the polyesters have a functionality of at least two. The suitable aliphatic polybasic carboxylic acids can contain for example from 2-36 carbon atoms. Preferably aliphatic polybasic carboxylic acids are used with 6-16 carbon atoms. They include for example adipic acid, sebacic acid, hexahydroterephthalic acid (CHDA:), decane dicarboxylic acid and/or dimerised fatty acids, tetrahydrophthalic acid, succinic acid, maleic acid and/or hexahydrophthalic acid or their corresponding anhydrides. It is also possible to use the corresponding lower alkyl esters. With "lower alkyl ester" is here and hereinafter meant the ester obtained by the reaction between the carboxylic acid and an alkyl alcohol with up to and including 6 carbon atoms.

The word "aliphatic" is here and hereinafter meant to include substituted and unsubstituted aliphatic compounds and substituted or unsubstituted cycloaliphatic compounds. The word aromatic is here and hereinafter meant to include both substituted and unsubstituted aromatic compounds. Substitution can also take place with groups containing heteroatoms, for example hydroxyl groups.

The polyester-forming reaction, the esterification, can take place in the presence of one or more catalysts. Examples of suitable catalysts are dibutyl tin oxide, tin chloride, butyl chlorotin dihydroxide or tetrabutyloxytitanate.

The molecular weight (Mₙ) of the polyester that is used in the coating composition according to the invention is usually between 1000 and 10000. A preferred range for the Mₙ of the polyester is between 1200 and 8000, more preferred between 1700 and 6000 and even more preferred between 2000 and 6000.

The polyester in the coating composition is preferably a solid, more preferred a solid powder. The glass transition temperature, Tg, of the solid polyester is generally between 45 and 80 °C, preferably between 50 and 70 °C. The higher the Tg of the solid polyester, the better its physical stability is. The glass transition temperature can be determined by standard DSC-techniques, for example a DSC 821-E from Mettler Toledo. The DSC-measurement is performed with a heating and cooling rate of 5°C/min.

The polyester as used in the coating composition according to the invention can be either hydroxyl functional or carboxyl functional. It is preferred to use a carboxyl functional polyester.

The acid number of the polyester is not particularly critical, it is however preferred to use a polyester with an acid value of 20-100 mg KOH/g polyester. Preferably the polyester has an acid number between 30 and 80. The acid number can be chosen depending on the field of application. For example in coating compositions with a 50/50 polyester/epoxy ratio, the acid number is preferentially between 70-80 mg KOH/g polyester, in 60/40 polyester/epoxy ratios the acid number is preferentially between 45-55 mg KOH/g polyester and in 70/30 polyester/epoxy ratios the acid number is preferentially between 30-40 mg KOH/g polyester. The hydroxy number of the polyester is not particularly critical and has normally a value of <10, preferably <5 mg KOH/g polyester.

The coating composition according to the invention can contain one or more polyesters based on ethylene glycol; however the composition can in addition to the polyester(s) based on ethylene glycol also contain one or more other polyesters not based on ethylene glycol. For all combinations of polyesters at least 8 w% of ethylene glycol must be present, calculated on the basis of the sum of all polyesters present.

The tertiary compound (B) that is present in the coating composition according to the invention is either according to formula I or to formula II:

YR¹R²R³ (I)

or

(YR¹R²R³R⁴)⁺X⁻ (II)

wherein:
Y is N
R¹, R², R³ or R⁴ are independently of each other, substituted or unsubstituted carbon chains with 1-50 carbon atoms in the main chain and wherein at least one of R¹, R², R³ or R⁴ is unsubstituted and has at least 8 carbon atoms
X' is halide.

In the coating composition according to the invention at least one tertiary compound must be present either according to formula I or to formula II. However it is also very well possible to combine two or more compounds. These two or more compounds can belong to the same formula or they can belong to the different formulas.

"Y" in the formula is nitrogen. At least one of R¹, R², R³ or R⁴ is unsubstituted and has at least 8 carbon atoms. This R-group with at least 8 carbon atoms is here and hereinafter referred to as the "long carbon chain". This long carbon chain has preferably 16-20 carbon atoms. The other remaining R-chains R¹, R², R³ or R⁴ are independently of each other, substituted or unsubstituted carbon chains with 1-50 carbon atoms in the main chain. They are here and hereinafter referred to as "short carbon chain". Preferably the short carbon chain contains 1-30, more preferred 1-12 carbon atoms. It is preferred to have only one "long carbon chain".

Examples of compounds according to formula I are octyldimethylamine, decyldimethylamine, dodecyldimethylamine, tetradecyldimethylamine, hexadecyldimethylamine, octadecyldimethylamine, didodecylmonomethylamine, ditetradecylmonomethylamine, dihexadecylmonomethylamine, di-tallow alkylmonomethylamine, (hydrogenated tallow alkyl)-dimethylamine, trioctylamine, tridecylamine, tridodecylamine or mixtures of any of them. Preferred compounds in this formula are (hydrogenated tallow alkyl)-dimethylamine and hexadecyldimethylamine (also known as palmityldimethylamine).

Examples of formula II are octyltrimethyl ammonium halides, decyltrimethyl ammonium halides, dodecyltrimethyl ammonium halides, tetradecyltrimethyl ammonium halides, hexadecyltrimethyl ammonium halides, octadecyltrimethyl ammonium halides, didodecyldimethyl ammonium halides, ditetradecylmonomethyl ammonium halides, dihexadecylmonomethyl ammonium halides, ditallowalkylmonomethyl ammonium halides, trioctyl ammonium halides, tridecyl ammonium halides, tridodecyl ammonium halides or mixtures of any of them.

The tertiary compound B) is generally present in an amount of 0.001-5 w%. It is preferred to use the compound in an amount of 0.01- 4 w%, more preferred between 0.1 and 3 w%. The amount is based on the amount of polyester in the coating composition.

The coating composition according to the invention can in addition to the polyester based on ethylene glycol (component A) and the tertiary compound (component B) also contain a separate component C that functions as a crosslinker. The person skilled in the art of coating compositions and especially polyester-based coating compositions knows what type of crosslinkers can be used in this field. Component C can for example be an epoxy-containing compound. Examples of epoxy-containing compounds are bisphenol-A or bisphenol-F epoxy resins. It is preferred to use a bisphenol-A epoxy resin. Examples are Araldite® GT 7004 (Vantico), Epikote® 1002 (Shell) or DER 663® (Dow). The bisphenol epoxy resins can vary considerably in molecular weight. This is most often expressed as the epoxy equivalent weight (EEW). The epoxy equivalent weight is the weight of an epoxy resin containing exactly one mole of epoxy groups, expressed in g/mol. The EEW is not particularly critical; a suitable range is 150-1000. Preferably epoxies with an EEW of 300-900, more preferably 500-800 and most preferably 600-750 are used.

The coating composition according to the invention can be used in all coating areas however it is most advantageously used as a powder coating composition. With powder is here and hereinafter meant a finely divided solid material with a particle size of 0.005 to 100 micrometer (µm).

The preparation of a thermosetting powder coating composition in general and the chemical reactions for curing powder-coating compositions to form cured coatings are described by Misev in Powder Coatings, Chemistry and Technology (1991, John Wiley) on pp. 42-54, p. 148 and pp. 224-226.

The coating composition is advantageously used in the so-called hybrid segment. In the hybrid segment carboxylfunctional polyesters can be combined with for example epoxy-resins based on bisphenol-A. Three main segments can be identified in this hybrid field: 50/50, 60/40 and 70/30 hybrids. The indication 70/30 means that approximately 70 w% polyester is combined with 30 w% epoxy resin. Besides these ratios sometimes other ratios are being used, for example 75/25 and 80/20. The hybrid coating compositions are mainly applied for indoor use, for example white goods (refrigerators).

The coating composition according to the invention can optionally contain the usual additives, for example fillers, degassing agents, flow agents and (light)stabilizers. Suitable fillers are for example metal oxides, silicates, carbonates and sulphates. Suitable stabilizers are for example primary and/or secondary antioxidants and UV stabilizers for example quinones, (sterically hindered) phenolic compounds, phosphonites, phosphites, thioethers and HALS (hindered amine light stabilizers). Examples of degassing agents are benzoin and cyclohexane dimethanol bisbenzoate. Other suitable additives are for example additives for improving tribo-chargeability.

The invention also relates to a process for curing a coating composition according to the invention. In this process optionally an epoxy-containing compound and/or optionally a curing catalyst and/or optionally the usual additives can be added to the coating composition according to the invention, whereafter the coating composition is applied onto a substrate and the coating composition is cured. This process gives especially favourable results when in addition to the coating composition according to the invention comprising a polyester A and an additive B, an epoxy-containing compound is added and the ratio between the polyester and the epoxy-containing compound is between 80/20 and 40/60. Preferably the epoxy-containing compound is based on bisphenol-A.

The coating composition according to the invention can be cured by the generally known curing techniques, for example thermal curing or curing with infrared radiation. Thermal curing can for example take place in a gas oven or in an electrical oven. The temperature during curing can be tailored to one's needs, depending on the coating composition to be cured and/ or on the substrate. A suitable temperature range is between 140 and 200 °C. The time necessary to obtain a coating with acceptable coating properties can be chosen between wide ranges, for example between 30 and 4 minutes. Generally the higher the curing temperature, the shorter the curing time can be.

The process according to the invention can be suitably applied to coating compositions that are powders. Powders can be sprayed onto the substrate for example by means of a tribo gun or corona gun.

The invention also relates to an entirely or partly coated substrate wherein the coating is obtained from the coating composition according to the invention.

The invention further relates to an entirely or partly coated substrate wherein optionally an epoxy-containing compound, optionally a curing catalyst and/or optionally the usual additives is/are added to the coating composition according to the invention, which is thereafter applied onto the substrate and cured. The optional epoxy-containing compound is preferably based on bisphenol-A.

The entirely or partly coated substrate has a coating with much better appearance with respect to surface defects, for example crater formation, fish eyes or pinholes. When the substrate is coated carefully with the coating composition according to the invention, a substrate with substantially reduced surface defects is obtained. The substrate is not particularly critical, suitable examples are metals, for example steel, aluminium.

In coating compositions that are made suitable for application onto a substrate by the use of a tribo-gun, it is common practice to add a tribo-chargeability enhancer. It has been found that by using the compound according to formula I and/or II for example in connection with a polyester based on ethylene glycol as described above, the tribo-chargeability of the composition is increased. This makes it possible to use less or no additional tribo-chargeability enhancer, which is from an economic and logistic point of view very interesting.

It has been found that the tribo-chargeability enhancing effect is especially pronounced for a composition comprising the polyester based on ethylene glycol as described above in combination with an epoxy-containing compound, for example an epoxy-containing crosslinker, preferably based on bisphenol-A.

The present invention is illustrated with reference to the following examples.

### EXAMPLES

### Example I:

### Two-steppreparation of a polyester resin.

A 6-litre reactor vessel fitted with a thermometer, a stirrer and a distillation device, was filled with the monomers for the first step as listed in Table I (in moles). Stirring was then applied and a light nitrogen flow was passed over the reaction mixture while the temperature was being raised to 200 °C. The temperature was gradually raised further to a maximum of 250 °C, and the reaction water was distilled off. The reaction was continued until the acid number of the polyester resin was below 20 mg KOH/g.

Subsequently, the monomers for the second step, adipic acid and isophtalic acid, were added and esterification was continued to an acid number of 34,5 mg KOH/g. The final stage of the polyester preparation was carried out under reduced pressure. Additionally the viscosity was determined to be 30 with a Rheomat Plate Plate viscosimeter (in Pa.s, at 160 °C). The glass transition temperature (Tg) of 55 °C was determined with a Mettler Toledo DSC 821-E (heating rate 5 °C/min).

**Table 1: Components for polyester synthesis**

| | **Component** | **Amount (g)** |
|---|---|---|
| **First step** | Trimethylol propane | 51,8 |
| | Terephtalic acid | 3132,9 |
| | Ethane diol | 679,05 |
| | Neopentylglycol | 1007,96 |
| | Di-butyltinoxide | 2,25 |
| | TNPP* | 4,50 |
| **Second step** | Adipic acid | 194,4 |
| | Isophtalic acid | 240,3 |

| | | |
|---|---|---|
| *TNPP=tris-nonylphenylphosphite | | |

### Example II B-D and Comparative Experiment 1:

### Masterbatches of the additive and the polyester resin of Example I:

Various additives (Table II) were added to the polyester resin of Example I, yielding so-called masterbatches IIB-IID containing 2 w additive/w% of the polyester resin. Also a masterbatch was prepared of the polyester resin of Example I and an additive not according to the invention (Comparative Experiment 1). The masterbatch was in each case (both in the Examples and in the Comparative Experiment) prepared by carefully heating up 600 g of polyester resin of Example I to a temperature of 180 °C. To the polyester resin of Example I was added 12 g of either additive B, C or D and for the Comparative Experiment 12 g of additive F. After mixing for approximately 30 minutes, the homogeneous reaction mixture was poured out, cooled to room temperature upon which a solid masterbatches was obtained.

**Table 2: Additives used**

| **Name of additive** | **Symbol** | **Masterbatch Example** | **Powder paint Example** |
|---|---|---|---|
| Hexadecyldimethylamine | B | IIB | IIIB |
| Di(octadecyl)methylamine | C | IIC | IIIC |
| Hexadecyltrimethylammonium bromide | D | IID | IIID |
| Ethyltriphenylphosphonium bromide | F | Compar. Exp.1 | Compar. Exp. 2 |

### Example III B-D and Comparative Experiment 2

### Preparation of powder paint

A powder paint composition was prepared consisting of crosslinking agent Araldite® GT-7004, titanium dioxide pigment (Kronos® 2310), Resiflow® PV5 (flow agent) and degassing agent benzoin. This powder paint composition was added to a granulated mix of the polyester resin according to Example I and the solid masterbatch according to either one of Example IIB-IID or the masterbatch according to Comparative Experiment 1. The ratio of the two polyesters was determined in such a way that the overall polyester resin gave a geltime between 85 and 165 seconds and consequently sufficient reactivity for the cure-cycle used (Table 3).

Thus: powder paint IIIB was obtained by mixing the polyester resin of Example I and the masterbatch of Example IIB; powder paint IIIC was obtained by mixing the polyester resin of Example I and the masterbatch of Example IIC; powder paint IIID was obtained by mixing the polyester resin of Example I and the masterbatch of Example IID; comparative powder paint 2 was obtained by mixing the polyester resin of Example I and the masterbatch of Comparative Experiment 1.

The powder paint was prepared by mixing and extrusion in a PRISM extruder at 115 °C. The composition was ground in the usual manner. The extrudate was cooled, milled and sieved and the fraction with particle size between 50-90 µm was collected and used as the powder paint. The powder paint was electrostatically sprayed (Corona) onto steel test panels. After a cure of 10 minutes at 180 °C in a circulation oven the panels were tested for reverse impact resistance (ASTM-2794/69 in inches per pound). The geltime was determined according to DIN 55990. The amount of coating defects per cm² was determined by visual evaluation of the coated panels at a thickness of 60 µm. The test results are shown in Table 3.

The tribo-chargeability is determined by measuring the current with a micro-Ampère meter when charging a powder in the Ransburg Gema HT100 spray gun. The manometers on the control unit are adjusted to a pressure of 4 bar. The powder is sprayed in the direction of an earthed object and at the same time the current is read from the display of the control unit. The flow of powder per volume and flow per time remains constant.

**Table 3: Powder paint compositions and test results**

| | **Powder paint** | | | **Compar. Powder Paint** |
|---|---|---|---|---|
| | IIIB | IIIC | IIID | 2 |
| Araldite ® GT 7004 | 60 | 60 | 60 | 60 |
| Polyester 1 | 70 | 35 | 70 | 103.8 |
| Masterbatch | 70 | 105 | 70 | 36.4 |
| Kronos ® 2310 | 100 | 100 | 100 | 100 |
| Benzoin | 1.5 | 1.5 | 1.5 | 1.5 |
| Resiflow ® PV5 | 3 | 3 | 3 | 3 |
| Geltime (s) | 112 | 149 | 129 | 85 |
| Mechanical resistance at 160 ip | OK | OK | OK | OK |
| Coating defects (µm/cm2) | <0.25 | 0.5 | 0.25 | 2.5 |
| Tribo-chargeability (µA) | 1.4 | 1.8 | 1.4 | 1.2 |

The composition according to the invention resulted in a coating having a substantially smaller amount of coated defects for coatings obtained from powder paint B-D, in contrast to a coating obtained from comparative powder paint 2 (Comparative Experiment 2).

In other words the use of additives B-D makes the coatings less susceptible to surface defects. It is also shown that the measured tribo-chargeability for powder paints IIIB-IIID is higher than for the comparative powder paint. At the same time other relevant properties like gloss, mechanical properties and coating colour remained constant.

## Claims

1. Coating composition comprising a polyester (A) based on a polyhydric alcohol and a polybasic carboxylic acid and an additive, **characterized in that** the polyhydric alcohol consists for at least 8 w% of ethylene glycol and that the additive is at least one tertiary compound (B) according to formula I and/or II
YR¹R²R³ (I)
or
(YR¹R²R³R⁴)⁺X⁻ (II)
wherein:
Y is N,
R¹, R², R³ or R⁴ are independently of each other, substituted or unsubstituted carbon chains with 1-50 carbon atoms in the main chain and wherein at least one of R¹, R², R³ or R⁴ is unsubstituted and has at least 8 carbon atoms,
X⁻ is halide.

2. Coating composition according to claim 1 **characterized in that** the composition is a powder coating composition.

3. Coating composition according to claim 1 or 2 **characterized in that** the tertiary compound B) is present in an amount between 0.1 and 3 w% based on the amount of polyester in the coating composition.

4. Coating composition according to any one of claim 1-3 **characterized in that** ethylene glycol is present in an amount between 10-22 w%.

5. Coating composition according to any one of claim 1-4 **characterized in that** in addition to the ethylene glycol one or more polyhydric alcohols chosen from the list 1,2-propanediol, di-ethylene glycol, polyethylene glycol or polypropylene glycol or mixtures of any of them are present.

6. Coating composition according to any one of claim 1-5 **characterized in that** the polyester A) is a carboxyl functional polyester.

7. Coating composition according to any one of claim 1-6 **characterized in that** in addition to A) and B) also an epoxy-containing compound C) is present.

8. Process for curing a composition according to any one of claims 1-7 by optionally adding an epoxy-containing compound, and/or a curing catalyst and/or the usual additives, applying the coating composition onto a substrate and curing the coating composition.

9. Process according to claim 8 **characterized in that** the ratio between the polyester and the epoxy-containing compound is between 80/20 and 40160.

10. Entirely or partly coated substrate **characterized in that** the coating is obtained from the coating composition according to any one of claims 1-7.

## Patentansprüche

1. Beschichtungszusammensetzung, enthaltend einen Polyester (A) auf Basis eines mehrwertigen Alkohols und einer mehrbasigen Carbonsäure und ein Additiv, **dadurch gekennzeichnet, daß** der mehrwertige Alkhol zu mindestens 8 Gew.-% aus Ethylenglykol besteht und es sich bei dem Additiv um mindestens eine tertiäre Verbindung (B) der Formel I und/oder II
YR¹R²R³ (I)
oder
(YR¹R²R³R⁴)⁺X⁻ (II)
worin:
Y für N steht,
R¹ R² R³ oder R⁴ unabhängig voneinander für substituierte oder unsubstituierte Kohlenstoffketten mit 1-50 Kohlenstoffatomen in der Hauptkette stehen und mindestens eine der Gruppen R¹, R², R³ oder R⁴ unsubstituiert ist und mindestens 8 Kohlenstoffatome aufweist und
X⁻ für Halogenid steht,
handelt.

2. Beschichtungszusammensetzung nach Anspruch 1, **dadurch gekennzeichnet, daß** es sich bei der Zusammensetzung um eine Pulverlackzusammensetzung handelt.

3. Beschichtungszusammensetzung nach Anspruch 1 oder 2, **dadurch gekennzeichnet, daß** die tertiäre Verbindung B) in einer Menge zwischen 0,1 und 3 Gew.-%, bezogen auf die Menge an Polyester in der Beschichtungszusammensetzung, vorliegt.

4. Beschichtungszusammensetzung nach einem der Ansprüche 1-3, **dadurch gekennzeichnet, daß** Ethylenglykol in einer Menge zwischen 10-22 Gew.-% vorliegt.

5. Beschichtungszusammensetzung nach einem der Ansprüche 1-4, **dadurch gekennzeichnet, daß** neben dem Ethylenglykol ein oder mehrere mehrwertige Alkohole aus der Liste 1,2-Propandiol, Diethylenglykol, Polyethylenglykol oder Polypropylenglykol oder Mischungen davon vorliegen.

6. Beschichtungszusammensetzung nach einem der Ansprüche 1-5, **dadurch gekennzeichnet, daß** es sich bei dem Polyester A) um einen carboxylfunktionellen Polyester handelt.

7. Beschichtungszusammensetzung nach einem der Ansprüche 1-6, **dadurch gekennzeichnet, daß** neben A) und B) außerdem eine epoxidgruppenhaltige Verbindung C) vorliegt.

8. Verfahren zur Härtung einer Zusammensetzung nach einem der Ansprüche 1-7 durch fakultative Zugabe einer epoxidgruppenhaltigen Verbindung und/oder eines Härtungskatalysators und/oder der üblichen Additive, Aufbringen der Beschichtungszusammensetzung auf ein Substrat und Härten der Beschichtungszusammensetzung.

9. Verfahren nach Anspruch 8, **dadurch gekennzeichnet, daß** das Verhältnis zwischen dem Polyester und der epoxidgruppenhaltigen Verbindung zwischen 80/20 und 40/60 liegt.

10. Ganz oder teilweise beschichtetes Substrat, **dadurch gekennzeichnet, daß** die Beschichtung aus der Beschichtungszusammensetzung nach einem der Ansprüche 1-7 erhalten wird.

## Revendications

1. Composition de revêtement comprenant un polyester (A) à base d'un polyol et d'un poly(acide carboxylique) et un additif, **caractérisée en ce que** le polyol se compose, à raison d'au moins 8% en poids, d'éthylène-glycol et **en ce que** l'additif est au moins un composé tertiaire (B) répondant à la formule I et/ou II
YR¹R²R³ (I)
ou
(YR¹R²R³R⁴)⁺X⁻ (II)
formules dans lesquelles :
Y représente N,
R¹, R², R³ ou R⁴ représentent, indépendamment les uns des autres, des chaînes carbonées, substituées ou non substituées, comportant 1-50 atomes de carbone dans la chaîne principale, et au moins un des radicaux R¹, R², R³ ou R⁴ est non substitué et comporte au moins 8 atomes de carbone,
X⁻ représente un halogénure.

2. Composition de revêtement selon la revendication 1, **caractérisée en ce que** la composition est une composition de revêtement en poudre.

3. Composition de revêtement selon la revendication 1 ou 2, **caractérisée en ce que** le composé tertiaire B) est présent en quantité comprise entre 0,1 et 3% en poids par rapport à la quantité de polyester dans la composition de revêtement.

4. Composition de revêtement selon l'une quelconque des revendications 1-3, **caractérisée en ce que** l'éthylèneglycol est présent en quantité comprise entre 10 et 22% en poids.

5. Composition de revêtement selon l'une quelconque des revendications 1-4, **caractérisée en ce que**, en plus de l'éthylèneglycol, un ou plusieurs polyols choisis parmi le 1,2-propanediol, le diéthylèneglycol, le polyéthylèneglycol ou le polypropylèneglycol ou des mélanges quelconques de ceux-ci, sont présents.

6. Composition de revêtement selon l'une quelconque des revendications 1-5, **caractérisée en ce que** le polyester A) est un polyester à fonction carboxyle.

7. Composition de revêtement selon l'une quelconque des revendications 1-6, **caractérisée en ce que**, en plus de A) et de B), un composé contenant une fonction époxy C) est aussi présent.

8. Procédé de durcissement d'une composition selon l'une quelconque des revendications 1-7 consistant à ajouter éventuellement un composé contenant une fonction époxy, et/ou un catalyseur de durcissement et/ou les additifs habituels, à appliquer la composition de revêtement sur un substrat et à durcir la composition de revêtement.

9. Procédé selon la revendication 8, **caractérisé en ce que** le rapport entre le polyester et le composé contenant une fonction époxy est compris entre 80/20 et 40/60.

10. Substrat revêtu entièrement ou partiellement, **caractérisé en ce que** le revêtement est obtenu à partir de la composition de revêtement selon l'une quelconque des revendications 1-7.
